# DEMANDE DE BREVET EUROPEEN

(11) **EP 0 910 104 A1**
(43) Date de publication de la demande: **21.04.1999**
(21) Numéro de dépôt: 98402438.0
(22) Date de dépôt: 05.10.1998
(51) Int. Cl.: H01H 39/00

(54) **Dispositif de sécurité d'un accumulateur électrochimique**

(30) Priorité: 16.10.1997 FR 9712959
(71) Demandeur: ALCATEL, 75008 Paris (FR)
(72) Inventeur: Souliac, Laurent, 86280 Saint Benoit (FR); Rigobert, Gérard, 86000 Poitiers (FR)
(74) Mandataire: Laroche, Danièle

(57) **Abrégé**

Dispositif de sécurité d'un accumulateur électrochimique (1), respectivement d'un module d'accumulateurs électrochimiques, ledit dispositif comprenant au moins un moyen de détection d'anomalie de fonctionnement (12, 13, 14) dudit accumulateur, respectivement d'un accumulateur compris dans ledit module, associé à un dispositif pyrotechnique (2), ledit dispositif pyrotechnique étant associé à au moins un moyen de cisaillement (11) d'une partie (51) d'une barrette (5) de connexion électrique dudit accumulateur, respectivement dudit accumulateur ou dudit module, et à au moins un moyen de mise en dérivation (4, 7, 8) de la partie susceptible d'être cisaillée.

## Description

La présente invention concerne un dispositif de sécurité pour accumulateur électrochimique, plus particulièrement de type coupe-circuit dans le cas de fortes intensités de courants débitées, soit d'environ 40 à 150 A.

Les dispositifs coupe-circuits existants pour les accumulateurs électrochimiques sous forme individuelle, c'est-à-dire les éléments, ou sous forme associée en module ou batterie (ensemble d'au moins un module) d'éléments, extérieurs audit accumulateur, sont généralement conçus pour couper des circuits d'intensité de courant débitée de quelques ampères, typiquement de 1 à 2 A. Ils agissent dans le cas d'une anomalie de fonctionnement dudit accumulateur électrochimique, typiquement une augmentation de pression et/ou de température, par exemple due à une surcharge ou à une surdécharge de l'accumulateur. Dans le cas d'intensités de courants débitées notablement plus élevées, ces dispositifs coupe-circuits sont inopérants, notamment en raison de la section plus importante des fils à rompre.

D'autre part, les dispositifs coupe-circuits utilisés dans le cas d'intensités de courants débitées élevées pour les accumulateurs électrochimiques sous forme individuelle ou, plus généralement, sous forme associée sont des dispositifs coupe-circuits à fusibles, qui présentent l'inconvénient d'être relativement lents (quelques secondes entre la détection de l'anomalie et la coupure du circuit), et surtout de couper totalement le passage du courant, mettant ainsi hors circuit toute la batterie associée audit accumulateur dans le cas d'un accumulateur sous forme associée.

Ainsi un des problèmes qui se posent est de trouver un dispositif coupe-circuit dans le cas de passage de fortes intensités de courants débitées dans un accumulateur donné, typiquement de 40 à 150 ampères, qui puisse réaliser un shunt total, c'est-à-dire qui puisse mettre en place en cas d'anomalie de fonctionnement un dispositif conducteur connecté en parallèle avec l'accumulateur qui assure la dérivation quasi totale du courant qui traverse ledit accumulateur. Un autre des problèmes posés est de trouver un dispositif coupe-circuit fiable et relativement rapide, sans danger pour l'utilisateur.

Enfin, un autre problème qui se pose est de réaliser un dispositif qui permette lors de l'utilisation normale de l'accumulateur avant toute anomalie de fonctionnement, d'assurer de bons contacts électriques pour les connexions de l'accumulateur. Ce problème est particulièrement critique dans le cas de fortes intensités de courants débitées. En particulier, il est intéressant de disposer de connexions fiables et sûres, dont les contacts électriques n'augmentent pas la résistance électrique et ne s'oxydent pas.

Le dispositif selon l'invention permet de réaliser la mise en dérivation d'une barrette de connexion électrique de l'accumulateur à son circuit de charge et/ou décharge, grâce à l'utilisation d'un dispositif pyrotechnique. Ladite mise en dérivation réalise un shunt total de l'accumulateur en cas d'anomalie de fonctionnement. Un tel dispositif peut aussi, dans le cas d'accumulateurs montés en module, permettre de réaliser la mise en dérivation d'une barrette de connexion électrique d'un module. Dans le cas de module compris dans une batterie d'au moins deux modules, le dispositif selon l'invention permet ainsi au reste de la batterie de continuer à fonctionner.

Ainsi, la présente invention concerne un dispositif de sécurité d'un accumulateur électrochimique comprenant au moins un moyen de détection d'anomalie de fonctionnement dudit accumulateur associé à un dispositif pyrotechnique, ledit dispositif pyrotechnique étant associé à au moins un moyen de cisaillement d'une partie d'une barrette de connexion électrique dudit accumulateur et à au moins un moyen de mise en dérivation de la partie susceptible d'être cisaillée.

Grâce à l'utilisation d'un dispositif pyrotechnique, le dispositif de sécurité selon l'invention a l'avantage de permettre une mise hors circuit d'un accumulateur de façon rapide, typiquement inférieure à 50 ms et supérieure à 10 ms, et fiable.

De plus, l'utilisation d'un tel dispositif a l'avantage en cas de fonctionnement normal, avant toute anomalie de fonctionnement, de disposer de contacts électriques fiables par le passage à travers une barrette physique de connexion ou par des vis.

L'invention concerne aussi un dispositif de sécurité d'un module d'accumulateurs électrochimiques comprenant au moins un moyen de détection d'anomalie de fonctionnement d'un accumulateur compris dans ledit module, associé à un dispositif pyrotechnique, ledit dispositif pyrotechnique étant associé à au moins un moyen de cisaillement d'une partie d'une barrette de connexion électrique dudit accumulateur ou dudit module, et à au moins un moyen de mise en dérivation de la partie susceptible d'être cisaillée.

De préférence, tout accumulateur compris dans ledit module comprend un moyen de détection d'anomalie de fonctionnement.

Grâce à l'utilisation d'un dispositif pyrotechnique, le dispositif de sécurité selon l'invention a l'avantage de permettre une mise hors circuit d'un module d'accumulateurs de façon rapide, typiquement inférieure à 50 ms et supérieure à 10 ms, et fiable. De plus dans un premier mode de réalisation, il permet la mise hors circuit de l'accumulateur défaillant du module sans mettre hors circuit tout le module. Dans un second mode de réalisation, il permet aussi, dans le cas d'une batterie d'au moins deux modules d'accumulateurs, la mise hors circuit du module comprenant l'élément défaillant sans mettre hors circuit le reste de la batterie.

L'invention sera mieux comprise et d'autres avantages et particularités apparaîtront à la lecture de la description qui va suivre, donnée à titre non limitatif, par référence aux dessins.

La figure 1 représente une vue en coupe partielle d'un accumulateur et d'un dispositif de sécurité selon l'invention avant déclenchement dudit dispositif de sécurité.

La figure 2 représente une vue en coupe des mêmes accumulateur et dispositif de sécurité après déclenchement dudit dispositif de sécurité.

La figure 3 représente une vue en perspective de la pièce 4 seule.

La figure 4 représente une vue de côté de la pièce 5 seule selon la flèche IV (voir figure 1).

Les mêmes numéros de référence sont utilisés pour les mêmes éléments dans les différentes figures.

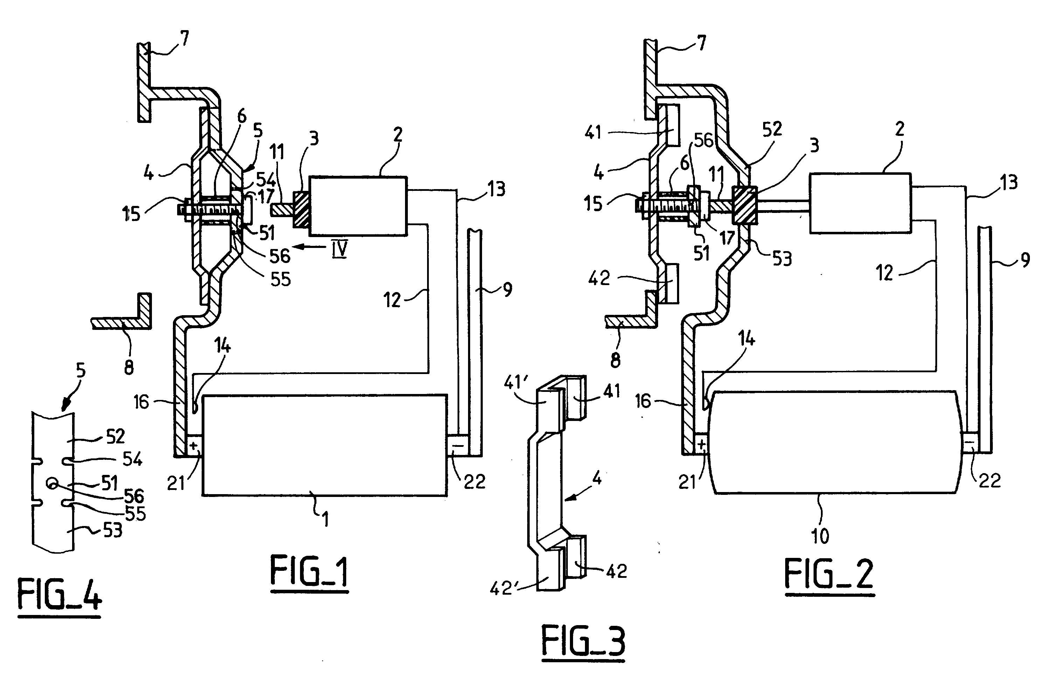

La figure 1 représente un accumulateur 1 muni d'un dispositif de sécurité selon l'invention. L'accumulateur comprend une borne de polarité positive 21, reliée par une barrette 16, puis par une barrette 5 ainsi que par une barrette 4, à une barrette 7, et une borne de polarité négative 22, relié à une barrette 9, les barrettes 16, 4, 5, 7 et 9 appartenant au circuit de charge et/ou de décharge de l'accumulateur 1.

La figure 4 est une vue de côté suivant la flèche IV (cf figure 1) de la barrette 5 avant déclenchement du dispositif de sécurité. Elle comporte une partie centrale susceptible d'être cisaillée 51, encadrée par une partie 52 et une partie 53. Afin de faciliter le cisaillement, la partie 51 de la barrette fixe 5 est délimitée par deux zones fragilisées 54 et 55. La surface de rupture de ladite partie 51 est généralement comprise entre 10 et 70 mm² pour un accumulateur de capacité comprise entre 50 et 100 Ah.

La barrette de connexion 5 comprend une ouverture centrale 56 permettant la fixation de la barrette de connexion électrique mobile 4 par l'intermédiaire d'une vis 17. La zone 51 est précontrainte par au moins un moyen de précontrainte (6, 15, 17) de façon à faciliter le cisaillement. Le moyen de précontrainte représenté sur la figure 1 consiste en une entretoise 6 solidaire des barrettes 4 et 5 par serrage de la vis 17 à l'aide d'un boulon 15.

La figure 3 est une vue en perspective de la barrette mobile 4. Les quatre oreilles 41, 41', 42, 42' permettent le maintien de la barrette 4 sur la barrette 5 en évitant un déplacement par rotation de ladite barrette 4.

Le courant qui circule dans la borne de sortie de polarité positive 21 circule dans la barrette 16, puis en partie dans la barrette mobile 4 et en partie dans la barrette fixe 5, et enfin dans la barrette 7. Le courant qui circule dans la borne de sortie de polarité négative 22 circule dans la barrette 9. Une barrette 8 n'est pas alimentée en courant. Elle est prévue pour la mise en dérivation de la barrette mobile 4. Ainsi le courant circule entre la barrette 9 et la barrette 7 via l'accumulateur 1.

Le dispositif de sécurité selon l'invention comprend un moyen de détection d'anomalie de fonctionnement (12, 13, 14) associé à un dispositif pyrotechnique 2, ledit dispositif pyrotechnique 2 étant associé à un moyen de mise en dérivation (4, 7, 8) et à un moyen de cisaillement 11.

Le dispositif pyrotechnique 2 est relié par le fil électrique 13 à la borne négative 22 de l'accumulateur et par le fil électrique 12 à une touche 14 de contact de gonflement qui ne touche pas ledit accumulateur avant déclenchement du dispositif de sécurité. Le boîtier de l'accumulateur est à la polarité positive. Le dispositif pyrotechnique 2 comprend un moyen de cisaillement qui est un piston 11. Le dispositif pyrotechnique est tel qu'il peut être déclenché par initiateur électrique qui sous une certaine tension à partir d'un certain ampérage provoque une combustion de la poudre contenue dans ledit dispositif pyrotechnique 2 et donc une augmentation de volume par dégagement de gaz qui génère une augmentation de pression suffisante pour pousser le piston 11. Le dispositif pyrotechnique est par exemple de caractéristiques (1A ; 2,5 V). Le piston 11 est associé à une cale en plastique 3. La cale en plastique 3 est une pièce isolante qui est apte à s'insérer au moins en partie à la place de la partie centrale 51 de la barrette 5.

La figure 2 montre les éléments de la figure 1 après déclenchement du dispositif de sécurité. Le dispositif a fonctionné grâce à la mise en circuit électrique du dispositif pyrotechnique 2, provenant du contact de la touche 14 avec l'accumulateur gonflé 10, qui a déclenché la mise en route du piston 11, réalisant la rupture de la partie centrale 51 de la barrette 5 par cisaillement, puis la mise en dérivation de la barrette mobile 4 mise en contact avec la barrette 8. Le dispositif selon l'invention peut comprendre en outre un moyen de guidage (non représenté) de la partie 51 de barrette 5 susceptible d'être cisaillée lors de sa mise en dérivation. La cale 3 est venue s'intercaler entre les parties 52 et 53 de la barrette fixe 5, assurant une isolation électrique qui permet d'assurer l'efficacité de la dérivation électrique. Le courant circule dans la barrette de dérivation 8 et la barrette 7, via la barrette mobile 4, et il évite ainsi l'accumulateur en dysfonctionnement 10.

Le dispositif selon l'invention peut comprendre en outre au moins un dispositif de décharge de l'accumulateur ou du module susceptible d'être mis en dérivation (non représenté ici).

Un autre mode de réalisation que celui présenté sur les figures 1 à 4 comprend un moyen de détection d'anomalie de fonctionnement qui est un moyen de détection de température par exemple une sonde de température logée à proximité de l'accumulateur ou du module d'accumulateurs, ainsi qu'il est connu de l'homme du métier.

Selon un mode de réalisation de l'invention, la partie susceptible d'être cisaillée est délimitée par une ou au moins deux zone(s) fragilisée(s), ou toute autre configuration de fragilisation.

Le dispositif de sécurité selon l'invention est particulièrement adapté à l'utilisation dans une batterie pour véhicule électrique En effet, l'invention concerne une batterie comportant au moins un module d'accumulateurs électrochimiques qui comporte au moins un dispositif de sécurité selon l'invention. Typiquement une batterie pour véhicule électrique peut comporter trente modules fonctionnant en série, chaque module étant un bac monobloc de six alvéoles comprenant chacune un accumulateur, les six alvéoles fonctionnant trois en série et deux en parallèle ou bien deux en série et trois en parallèle. Au moins un, de préférence tout accumulateur de module de ladite batterie comprend un dispositif de sécurité selon l'invention. L'invention concerne enfin un véhicule comprenant au moins un moyen de propulsion et alimenté par une source d'énergie comprenant au moins une telle batterie. L'invention s'applique ainsi en particulier à une utilisation de la batterie décrite précédemment en tant que batterie de véhicule électrique.

## Revendications

1. Dispositif de sécurité d'un accumulateur électrochimique comprenant au moins un moyen de détection d'anomalie de fonctionnement (12, 13, 14) dudit accumulateur associé à un dispositif pyrotechnique (2), ledit dispositif étant associé à au moins un moyen de cisaillement (11) d'une partie (51) d'une barrette (5) de connexion électrique dudit accumulateur, et à au moins un moyen de mise en dérivation (4, 7, 8) de la partie (51) susceptible d'être cisaillée.

2. Dispositif de sécurité d'un module d'accumulateurs électrochimiques comprenant au moins un moyen de détection d'anomalie de fonctionnement (12, 13, 14) d'un accumulateur compris dans ledit module, associé à un dispositif pyrotechnique (2), ledit dispositif pyrotechnique étant associé à au moins un moyen de cisaillement (11) d'une partie (51) d'une barrette (5) de connexion électrique dudit accumulateur ou dudit module, et à au moins un moyen de mise en dérivation (4, 7, 8) de la partie (51) susceptible d'être cisaillée.

3. Dispositif selon la revendication 2 tel que tout accumulateur compris dans ledit module comprend un moyen de détection d'anomalie de fonctionnement (12, 13, 14).

4. Dispositif selon l'une des revendications 1 à 3 tel que tel que ledit dispositif comprend aussi une pièce isolante (3) qui est apte à s'insérer au moins en partie à la place de la partie susceptible d'être cisaillée.

5. Dispositif selon l'une des revendications 1 à 4 tel que la partie (51) de la barrette (5) susceptible d'être cisaillée est précontrainte par au moins un moyen de précontrainte (6, 15, 17).

6. Dispositif selon l'une des revendications 1 à 5 tel que la partie (51) de la barrette (5) susceptible d'être cisaillée est délimitée par au moins une zone fragilisée (54, 55).

7. Dispositif selon l'une des revendications 1 à 6 comprenant en outre au moins un dispositif de décharge de l'accumulateur ou du module susceptible d'être mis en dérivation.

8. Dispositif selon l'une des revendications 1 à 7 comprenant en outre un moyen de guidage de la partie (51) de barrette (5) susceptible d'être cisaillée lors de sa mise en dérivation.

9. Dispositif selon l'une des revendications 1 à 8 tel que le moyen de détection d'anomalie de fonctionnement (12, 13, 14) est un moyen de détection de gonflement (14) de l'accumulateur associé à un moyen de connexion électrique (12, 13) du dispositif pyrotechnique.

10. Dispositif selon l'une des revendications 1 à 8 tel que le moyen de détection d'anomalie de fonctionnement est un moyen de détection de température de l'accumulateur associé à un moyen de connexion électrique du dispositif pyrotechnique.

11. Batterie comportant au moins un module d'accumulateurs électrochimiques qui comporte au moins un dispositif de sécurité selon l'une des revendications 1 à 10.

12. Véhicule comprenant au moins un moyen de propulsion et alimenté par au moins une source d'énergie comprenant au moins une batterie selon la revendication 11.
